# EUROPEAN PATENT SPECIFICATION

(11) **EP 1 560 698 B1**
(45) Date of publication and mention of the grant of the patent: **09.01.2008**
(21) Application number: 02788551.6
(22) Date of filing: 05.11.2002
(51) Int. Cl.: B29D 30/60, B29D 30/20

(54) **A METHOD AND AN APPARATUS FOR ASSEMBLING TYRES FOR VEHICLE WHEELS**
VERFAHREN UND VORRICHTUNG ZUM AUFBAUEN EINES FAHRZEUGREIFENS
PROCEDE ET APPAREIL DE REALISATION D'UN PNEUMATIQUE

(43) Date of publication of application: 10.08.2005
(73) Proprietor: Pirelli Tyre S.p.A., 20126 Milano (IT)
(72) Inventor: LACAGNINA, Claudio, I-21052 Busto Arsizio (IT)
(74) Representative: Tansini, Elio Fabrizio
(86) International application number: PCT/IT2002/000699
(87) International publication number: WO 2004/041521

(56) References cited:
- EP-A- 1 211 057
- WO-A-01/36185
- WO-A-98/58794
- WO-A-02/094545
- US-A- 3 775 220
- US-A1- 2002 153 083

## Description

The present invention relates to a method of assembling tyres for vehicle wheels. The invention also pertains to an apparatus for assembling vehicle tyres, to be used for putting into practice the above mentioned assembling method.

A tyre for vehicle wheels generally comprises a carcass structure including at least one carcass ply having respectively opposite end flaps turned up loop-wise around annular anchoring structures, each of said anchoring structures being usually made up of a substantially circumferential annular insert onto which at least one filling insert is applied, at a radially external position thereof.

Associated with the carcass structure is a belt structure comprising one or more belt layers, arranged in radial superposed relationship with each other and with the carcass ply and having textile or metallic reinforcing cords of crossed orientation and/or disposed substantially parallel to the circumferential extension direction of the tyre. Applied to the belt structure at a radially external position thereof is a tread band, made of elastomer material like other semifinished products being constituent parts of the tyre.

To the aims of the present description it is to be pointed out that by the term "elastomer material" it is meant a rubber blend in its entirety, i.e. the compound made up of at least one base polymer suitably amalgamated with reinforcing fillers and/or process additives of various types.

In addition respective sidewalls of elastomer material are also applied to the side surfaces of the carcass structure, each of them extending from one of the side edges of the tread band until close to the respective annular anchoring structure at the beads, which sidewalls, depending on the different embodiments, can exhibit respective radially external end edges either superposed on the side edges of the tread band so as to form a design scheme of the type usually referred to as "overlying sidewalls", or interposed between the carcass structure and the side edges of the tread band itself, in accordance with a design scheme of the type referred to as "underlying sidewalls".

In most of the known processes for tyre manufacture, the carcass structure and belt structure together with the respective tread band are provided to be made separately of each other in respective work stations, to be mutually assembled at a later time.

More particularly, manufacture of the carcass structure first contemplates deposition of the carcass ply or plies on a first drum usually identified as "building drum" to form a cylindrical sleeve. The annular anchoring structures at the beads are fitted or formed on the opposite end flaps of the carcass ply or plies that in turn are turned up around the annular structures themselves so as to enclose them in a sort of loop.

Simultaneously, on a second drum or auxiliary drum, an outer sleeve is made which comprises the belt layers laid down in radially superposed relationship with each other, and the tread band applied to the belt layers at a radially external position thereof. The outer sleeve is then picked up from the auxiliary drum to be coupled with the carcass sleeve. For the purpose, the outer sleeve is disposed in coaxial relation around the carcass sleeve, afterwards the carcass ply or plies are shaped into a toroidal conformation by axially moving the beads close to each other and simultaneously admitting fluid under pressure into the carcass sleeve, so as to determine application of the belt band and the tread band to the carcass structure of the tyre at a radially external position thereof. Assembling of the carcass sleeve with the outer sleeve can be carried out on the same drum as used for building the carcass sleeve, in which case reference is made to a "unistage building process". A building process of this type is described in document US 3,990,931, for example.

Alternatively, assembling may be carried out on a so-called "shaping drum" onto which the carcass sleeve and outer sleeve are transferred, to build the tyre following a so-called "two-stage building process", as described in document EP 0 613 757, for example.

In conventional assembling methods the tread band is usually obtained from a continuously-extruded section member that, after being cooled for stabilisation of its geometrical conformation, is stored on suitable benches or reels. The semifinished product in the form of sections or of a continuous strip is then sent to a feeding unit carrying out either picking up of the sections or cutting of the continuous strip into sections of given length, each of them constituting the tread band to be circumferentially applied to the belt structure of a tyre being processed.

Known from document GB 1,048,241 is a machine for laying down a layer of elastomer material of varying thickness on a tyre carcass and comprising a feeding head to apply a ribbon of elastomer material to the carcass, means for setting the carcass in rotation around its axis for winding of a plurality of coils thereon when the carcass rotates with respect to the feeding head, means for moving the feeding head transversely of the carcass, from one side to the other of the circumferential median plane of the carcass, and means for automatically varying the transverse-movement amount for each winding revolution so as to vary the overlapping degree of the contiguous coils and consequently thickness of the layer formed on the carcass. In an appropriate version for making new tyres, during formation of the tread band the carcass is mounted on a building drum and has a cylindrical right conformation.

In document WO 01/36185, in the name of the same Applicant, a robotized arm bears a toroidal support on which each of the components of a tyre under production is directly made. The robotized arm gives the toroidal support a circumferential-distribution motion around its geometric axis, simultaneously with controlled transverse-distribution displacements in front of a delivery member supplying a narrow strip of elastomer material. The narrow strip therefore forms a plurality of coils the orientation and mutual-overlapping parameters of which are suitably managed so as to control the variations in thickness to be given to a component of a tyre being made, based on a predetermined deposition scheme preset on an electronic computer.

EP 1211057 discloses a tyre manufacturing method where a bead filler, rubber chafer and sidewall all premolded are applied around a carcass band by winding round those members thereupon to adhere thereto using a conventional technique; after the center portion of carcass band is deformed by expansion until it is brought into intimate contact with the inner circular face of a belt structure properly set in advance, an unvulcanized rubber strip is applied to the outer peripheral face of the belt structure by spirally winding round the rubber strip thereupon; and thus a tread is formed on the center portion of carcass band 23.

EP 1106335 discloses a tyre manufacturing plant wherein rubber parts of the tyre are formed by spirally winding a rubber strip delivered from an extruder. In particular, in the forming processes of a belt/tread member, an auxiliary drum is first disposed to a position facing a belt servicer by moving the auxiliary drum itself on rails extending along the direction of the common axis of the primary drum and auxiliary drums. A 1st belt and a 2nd belt, for one tire, are supplied from the belt servicer and wound around the auxiliary drum.

Next, the auxiliary drum is moved on the rails, to reach a position facing the a rubber parts servicers comprising extruders. Rubber strips supplied from the rubber parts servicer is wound around the auxiliary drum while controlling the rotating speed of the forming drum and the traversing speed of the rubber parts servicer. In this manner, a tread band is formed around the auxiliary drum.

In the production contexts to which the present invention (contemplating production and storage of semifinished products and subsequent assembling of same on a building and/or shaping drum) is addressed, for manufacturing the tread bands, installation of extrusion lines is presently required that must necessarily have a high productivity, in order to offer appropriate responses in terms of economy on a large scale. As a result, an extrusion line is usually capable of supplying a plurality of assembling stations. In fact, productivity of the extrusion line is required to be adjusted in proportion to the productivity of the assembling stations the number of which has an influence on saturation and therefore productivity of the extrusion line.

In accordance with the present invention, the Applicant intends to overcome the strong constraints imposed by the above described circumstance, that particularly reveal themselves in the impossibility of the production plants being modified in response to sudden variations in the market demand in terms of productivity and product typology. In fact, since the plant productivity is greatly connected with the productivity of the tread band extrusion line, an increase in productivity would normally require installation of a further extrusion line, which would bring about an increase in the production capacity that at this point would be in excess with respect to the real market demand.

In dealing with the above discussed problems, the Applicant realized the possibility of achieving great improvements in terms of production flexibility and quality of the product by manufacturing the tread band in the present tyre building processes contemplating assembling of semifinished products, through winding up of a continuous strip-like element into coils disposed in side by side relationship directly on the belt structure.

In more detail, it is an object of the present invention to provide a method of assembling tyres for vehicle wheels according to claim 1.

In accordance with a further inventive aspect, the above mentioned method can be carried out by means of an apparatus for assembling tyres for vehicle wheels as claimed in claim 9.

Further features and advantages will become more apparent from the detailed description of a preferred, but not exclusive, embodiment of a method and an apparatus for assembling tyres for vehicle wheels, in accordance with the present invention.

This description will be set out hereinafter with reference to the accompanying drawings, given by way of non-limiting example, in which:
- Fig. 1 is a diagrammatic top view of an apparatus for assembling tyres in accordance with the present invention;
- Fig. 2 is an elevation view of the apparatus in Fig. 1;
- Fig. 3 is a diagrammatic fragmentary cross-section view of a tyre obtainable in accordance with the present invention.

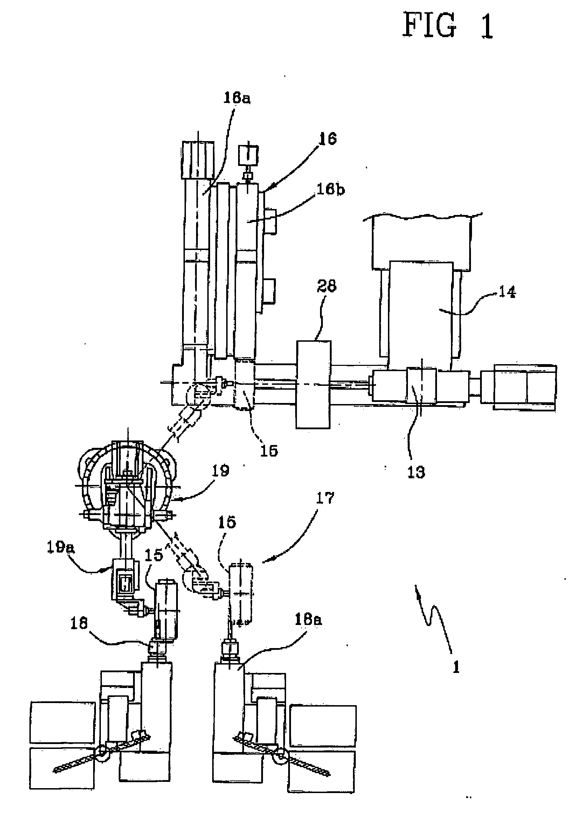

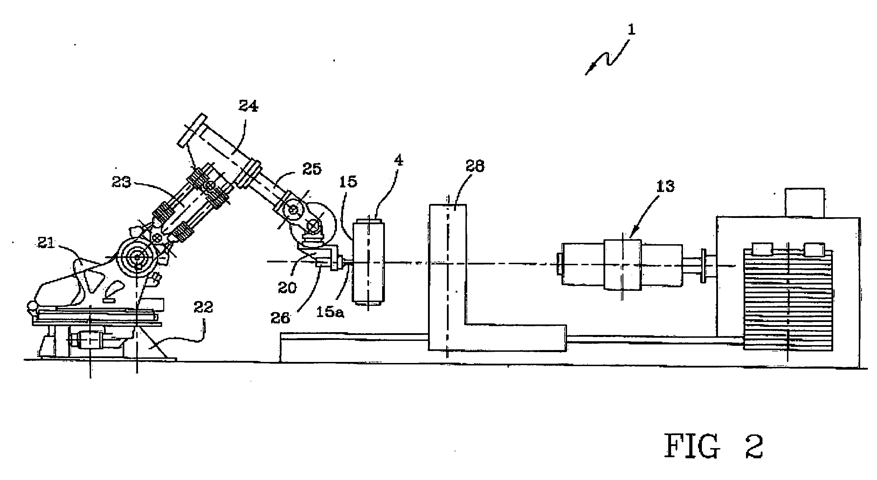

Referring particularly to Figs. 1 and 2, an apparatus for assembling tyres for vehicle wheels set to put into practice an assembling method in accordance with the present invention has been generally identified by reference numeral 1.

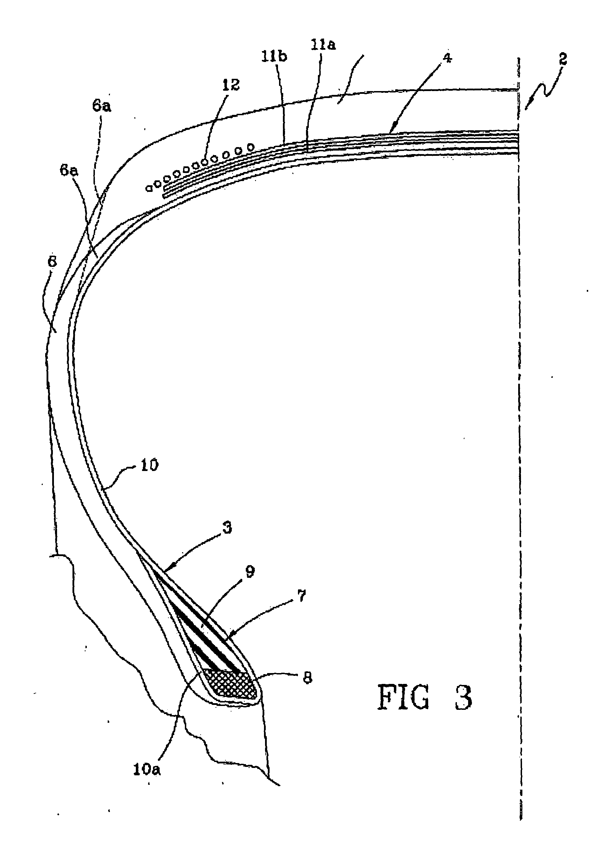

The invention aims at making tyres of the type generally identified with 2 in Fig. 3, essentially comprising a carcass structure 3 of substantially toroidal conformation, a belt structure 4 of substantially cylindrical conformation, circumferentially extending around the carcass structure 3, a tread band 5 applied to the belt structure 4 at a circumferentially external position thereof, and a pair of sidewalls 6 laterally applied, on opposite sides, to the carcass structure 3 and each extending from a side edge of the tread band until close to a radially internal edge of the carcass structure itself.

Each sidewall 6 may exhibit a radially external end tailpiece 6a at least partly covered with the extremity of the tread band 5, as shown in solid line in Fig. 3, following a design scheme of the type usually identified as "underlying sidewalls".
Alternatively, the radially external end tailpieces 6a of sidewalls 6 can be laterally superposed on the corresponding extremities of the tread band 5, as shown in chain line in Fig. 3, to achieve a design scheme of the type usually identified as "overlying sidewalls".

The carcass structure 3 comprises a pair of annular anchoring structures 7 integrated into regions usually identified as "beads", each of them being for example made up of a substantially circumferential annular insert 8 usually called "bead core" and carrying an elastomer filler 9 at a radially external position thereof.

Turned up around each of the annular anchoring structures are the end flaps 10a of one or more carcass plies 10 comprising textile or metallic cords extending transversely of the circumferential extension of tyre 2, possibly following a predetermined inclination between the two annular anchoring structures 7.

The belt structure 4 can in turn comprise one or more belt layers 11a, 11b including metallic or textile cords suitably inclined to the circumferential extension of the tyre, in respectively crossed orientations between one belt layer and the other, as well as a possible external belting layer 12 including one or more cords circumferentially wound into coils axially disposed in side by side relationship around the belt layers 11a, 11b.

In heavy-duty tyres, tyres for trucks and heavy transport vehicles for example, the belt structure may also incorporate a gravel-guard strip (not shown) adapted to prevent foreign bodies from entering the underlying belt layers.

The sidewalls 6 and tread band 5 each essentially comprise at least one layer of elastomer material of suitable thickness. Also associated with the thread band 5 may be a so-called substrate (not shown), of elastomer material having appropriate composition and physico-chemical features and acting as an interface between the true tread band and the underlying belt structure 4.

The individual components of the carcass structure 3 and belt structure 4, such as in particular the annular anchoring structures 7, carcass plies 10, belt layers 11a, 11b and further possible reinforcing elements designed to constitute the outer belting layer 12, are supplied to apparatus 1 in the form of semifinished products made during preceding manufacturing steps, to be suitably assembled with each other.

Apparatus 1 comprises a primary drum 13, not shown in detail as it can be made in any convenient manner, on which the carcass ply or plies 10 are first wound up; said plies come from a feeding line 14 along which they are cut into sections of appropriate length correlated with the circumferential extension of the primary drum 13, before being applied thereto to form a so-called substantially cylindrical "carcass sleeve". Afterwards, the annular anchoring structures 7 are fitted onto the end flaps 10a of plies 10 to subsequently carry out turning-up of the end flaps themselves to cause engagement of the anchoring structures into the loops thus formed by the turned-up plies 10. Applied to the carcass sleeve can also be the tyre sidewalls 6 coming from at least one respective sidewall-feeding line (not shown) supplying a semifinished product in the form of a continuous strip of elastomer material from which sections of a predetermined length are cut out, said length being correlated with the circumferential extension of the primary drum 13 and the tyre 2 to be obtained.

Alternatively, assembling of the carcass structure 3 components and possibly of the sidewalls 6 too, can be carried out separately on a different building drum, so that the assembled carcass sleeve will be subsequently transferred onto the primary drum 13.

Simultaneously with assembling of the carcass structure 3 components, in the form of a cylindrical sleeve, on the primary drum 13, or with transfer thereto of the already assembled carcass structure, the belt structure 4, and preferably the tread band 5 as well, are disposed on an auxiliary drum 15.

More particularly, to this aim the auxiliary drum 15 is provided to be such arranged, in coaxial-alignment relationship with the primary drum 13, that it interacts with devices 16 for application of the belt structure 4 on the auxiliary drum itself. By way of example, said devices 16 for application of the belt structure may comprise at least one feeding line 16a along which the semifinished products in the form of a continuous strip are caused to move forward, said strip being then cut into sections of a length corresponding to the circumferential extension of the auxiliary drum 15, concurrently with formation of the corresponding belt layers 11a, 11b thereon. A feeding unit for supplying a gravel-guard strip 16b as well as a feeding unit for supplying one or more continuous cords (not shown in the drawings) to be applied onto the belt layers to form axially contiguous circumferential coils, may be combined with the feeding line of the belt layers 16a.

When formation of the belt structure 4 has been completed, movement of the auxiliary drum 15 is carried out starting from a position at which it interacts with the devices for application of the belt structure 16, to be submitted to the action of at least one unit for application of the tread band, generally denoted by 17.

The tread band application unit 17 comprises at least one delivery member 18 set to lay down at least one continuous strip-like element of elastomer material in contiguous circumferential coils on the belt structure 4. In more detail, the delivery member 18 may for example comprise an extruder, an applicator roller or another member adapted to delivery the continuous strip-like element of elastomer material directly against the belt structure 4 supported by the auxiliary drum 15, simultaneously with winding up of the strip-like element itself around the belt structure 4. An actuating assembly 19 operates on the auxiliary drum 15 to drive it in rotation around a geometric axis thereof, so that the strip-like element is circumferentially distributed on the belt structure 4. Simultaneously, the actuating assembly 19 carries out controlled relative displacements between the auxiliary drum 15 and delivery member 18, to distribute the strip-like element in coils disposed in mutual side by side relationship to form the tread band 5 in accordance with the desired thickness and geometric-conformation requirements.

In a preferential embodiment shown in Figs. 1 and 2, the actuating assembly 19 is integrated into at least one robotized arm 19a carrying an end head 20 to which the auxiliary drum 15 is fastened in cantilevered fashion by a shank 15a coincident with the geometric axis thereof. In the example shown (see Fig. 2) the robotized arm 19a comprises a base 21 rotating on a fixed platform 22 around a first vertical axis, a first portion 23 oscillatably connected to base 21 around a second, preferably horizontal, axis, a second portion 24 oscillatably connected to the first portion 23 around a third axis, which is preferably horizontal too, and a third portion 25 rotatably supported by the second portion 24 around an axis orthogonal to the third oscillation axis. The head 20 of the robotized arm 19a is connected at its end with the third portion, being allowed to oscillate around a fifth and a sixth oscillation axes that are perpendicular to each other, and rotatably carries the auxiliary drum 15, operable in rotation by a motor 26.

The robotized arm 19a, therefore is adapted to support the auxiliary drum 15 and to control movement of same during the whole production cycle, driving it in rotation in front of the feeding lines of the belt layers 16a, 16b for the purpose of their application, and subsequently taking it in front of the extruder 18 of the continuous strip-like element designed to constitute the tread band 5. When for the tread band 5 manufacture formation of a substrate is required, an auxiliary extruder 18a may be provided for feeding the elastomer material, still in the form of a continuous strip-like element, designed to constitute such a substrate. In this case, the auxiliary drum 15 is first moved towards the auxiliary extruder 18a intended for making the substrate, and subsequently transferred to extruder 18 for manufacture of the true tread band 5.

During manufacture of the tread band 5, each of the extruders 18, 18a keeps a fixed positioning, while the auxiliary drum 15 is driven in rotation and suitably moved in a transverse direction by the robotized arm 19a, so as to cause distribution of the continuous strip-like element in order to form a layer of appropriate shape and thickness upon the belt structure 4. The continuous strip-like element fed from each of the extruders 18, 18a can advantageously have a flattened section so that it can modulate the thickness of the elastomer layer formed on the belt structure 4 by varying the overlapping amount of the contiguous coils and/or orientation of the surface of the belt structure 4 with respect to the cross-section outline of the strip-like element coming from the extruder 18, 18a.

Once manufacture of the tread band 5 has been completed, the robotized arm 19a causes a new translation of the auxiliary drum 15 to move it away from the extruder 18 or other delivery member and to position it again in axial-alignment relationship with respect to the primary drum 13.

The belt structure 4. carrying the tread band 5 is adapted to be picked up by the auxiliary drum 15 and transferred onto the carcass structure in the form of a cylindrical sleeve that has been meanwhile formed or engaged on the primary drum 13. To this aim a transfer member 28 of substantially annular conformation is moved until it is positioned around the auxiliary drum 15 to pick up the belt structure 4 and tread band 5 therefrom. In a manner known by itself, the auxiliary drum 15 disengages the belt structure 4 that is then axially translated by the transfer member 28 to be placed to a coaxially centred position on the primary drum 13 carrying the carcass sleeve.

The carcass sleeve is then shaped into a toroidal configuration by axially moving the annular anchoring structures 7 close to each other and simultaneously admitting fluid under pressure into the sleeve itself until the carcass plies are brought into contact with the inner surface of the belt structure 4 held by the transfer member 28. The tyre 2 thus built lends itself to be removed from the primary drum 13 to be afterwards submitted to a normal vulcanisation step.

The present invention achieves important advantages.

Manufacture of the tread band 5 by winding a continuous strip-like element into coils disposed in side by side relationship enables in fact all the limits of the known art correlated with the requirement of using complicated and bulky machinery for tread band production through extrusion, to be overcome; in fact use of this complicated and bulky machinery involves high investment and running costs only justified by a production on a large scale. The invention on the contrary enables the tread band to be produced with much simpler and less bulky machinery, suitable for a production adjusted in proportion to the productivity of the individual assembling apparatus 1.

Consequently, tyre-building plants currently in use and comprising a plurality of assembling apparatus interlocked with the same tread band extrusion line can be advantageously adapted to the increases in productivity requested by the market, by merely adding one or more apparatus according to the invention, so as to obtain an increase in productivity meeting the market requirements.

It should be also appreciated that the present invention enables a greater evenness of the tread band to be achieved, which evenness in the known art was greatly conditioned by a correct distribution of the strip of raw elastomer material being applied around the belt structure, particularly at the end-to-end junction of the extremities of the strip itself.

In the known art, these conditions also gave rise to a great number of discarded products, the present invention, on the contrary, allowing to eliminate them.

In addition, further advantages from a qualitative point of view have repercussions on traditional extrusion lines when the apparatus in reference is used in combination with other apparatus interlocked with an extrusion line of known type. For example, combination of the concerned apparatus with a known plant provided with one or more traditional extrusion lines makes it possible to reduce productivity of the extrusion lines when it is necessary to carry out working of particular blends and materials that, due to process requirements, cannot be extruded at high speed, without on the other hand impairing the overall productivity of the plant. In addition, the extrusion lines can be advantageously utilised with an appropriate margin from their maximum productivity limit, under such conditions that more guarantees in terms of constancy in the quality of the obtained product are obtained.

## Claims

1. A method of assembling tyres for vehicle wheels, comprising the steps of:
(a) - disposing on a primary drum (13), a carcass structure (3) comprising at least one carcass ply (10) in engagement with annular anchoring structures (7) axially spaced apart from each other;
(b) - disposing a belt structure (4) comprising at least one belt layer (11a, 11b, 12), on an auxiliary drum (15) arranged in coaxial-alignment relationship with the primary drum (13); subsequently
(c) - moving the auxiliary drum (15) away from a vertical plane containing the rotation axis of the primary drum (13) towards a delivery member (18,18a), starting from a position at which the auxiliary drum (15) interacts with devices (16) for application of the belt structure; subsequently
(d) - applying a tread band (5) onto the belt structure (4) by winding up at least one continuous strip-like element of elastomer material in contiguous circumferential coils around the belt structure (4); subsequently
(e) - moving the auxiliary drum (15) away from said delivery member (18,18a) to position it again in axial-alignment relationship with respect to the primary drum (13), once application of the tread band (5) has been completed; subsequently
(f) - picking up the belt structure (4) from the auxiliary drum (15) to transfer it to a position coaxially centred with respect to the carcass structure (3).

2. A method as claimed in claim 1, wherein the continuous strip-like element is fed from a delivery member (18, 18a) placed at a region close to the belt structure (4), simultaneously with winding up of the strip-like element itself around the belt structure (4) .

3. A method as claimed in claim 2, wherein feeding of the continuous strip-like element is carried out by extrusion through said delivery member (18, 18a).

4. A method as claimed in claim 2, wherein concurrently with application of the continuous strip-like element, the following steps are carried out:
- giving the auxiliary drum (15) carrying the belt structure (4) a circumferential-distribution rotatory motion around a geometric rotation axis thereof, so that the continuous strip-like element is circumferentially distributed around the belt structure (4) :
- carrying out controlled relative transverse-distribution displacements between the auxiliary drum (15) and delivery member (18, 18a) so that with said strip-like element a plurality of coils disposed in mutual side by side relationship are formed, in order to define the tread band (5).

5. A method as claimed in claim 4, wherein said transverse-distribution displacements are carried out by movement of the auxiliary drum (15).

6. A method as claimed in claim 4, wherein driving in rotation and movement of the auxiliary drum (15) are carried out by an actuating assembly (19a) engaging the auxiliary drum itself.

7. A method as claimed in claim 1, wherein the step of arranging the carcass structure (3) is carried out by assembling the component parts of the carcass structure itself on the primary drum (13).

8. A method as claimed in claim 1, wherein the belt structure (4) transferred to a coaxially centred position on the carcass structure (3) is coupled with said carcass structure following a step of shaping the carcass structure (3) itself into a toroidal configuration.

9. An apparatus for assembling tyres for vehicle wheels comprising:
- a primary drum (13) arranged to support a carcass structure (3) comprising at least one carcass ply (10) in engagement with anchoring structures (7) axially spaced apart from each other;
- an auxiliary drum (15) set to carry a belt structure (4);
- devices (16) for application of belt layers on the auxiliary drum (15) arranged in coaxial-alignment relationship with the primary drum (13), to form said belt structure (4);
- at least one unit (17) for application of a tread band (5) onto the belt structure (4);
- a transfer member (28) to move the belt structure (4) from the auxiliary drum (15) to the primary drum (13);
wherein said at least one application unit (17) comprises:
- at least one delivery member (18, 18a) to lay down at least one continuous strip-like element of elastomer material in contiguous circumferential coils on the belt structure (4); and
- an actuating assembly (19) set to drive the auxiliary drum (15) in rotation around a geometric axis thereof so that said strip-like element is circumferentially distributed on the belt structure (4), and to cause controlled relative displacements between the auxiliary drum (15) and said at least one delivery member (18, 18a) for distribution of said strip-like element so as to form said coils disposed in mutual side by side relationship to define the tread band (5);
wherein said actuating assembly (19) is arranged
- to cause translation of the auxiliary drum (15) away from a vertical plane containing the rotation axis of the primary drum (13) towards said at least one delivery member (18, 18a) starting from a position at which the auxiliary drum (15) interacts with the devices (16) for application of the belt structure, and
- to move the auxiliary drum (15) away from said delivery member (18, 18a) to position it again in axial-alignment relationship with respect to the primary drum (13).

10. An apparatus as claimed in claim 9, wherein said delivery member comprises at least one extruder (18, 18a).

11. An apparatus as claimed in claim 9, wherein said actuating assembly (19) operates on the auxiliary drum (15) to move it relative to the delivery member (18, 18a) .

12. An apparatus as claimed in claim 9, wherein said actuating assembly is integrated into a robotized arm (19a) engaging the auxiliary drum (15).

13. An apparatus as claimed in claim 9, wherein the actuating assembly (19) comprises a carriage (19b) movable along a guide structure (27) between a first position at which it supports the auxiliary drum (15) at a location in front of application devices (16) of the belt structure, and a second position at which it supports the auxiliary drum (15) at a location in front of said at least one delivery member (18, 18a).

## Patentansprüche

1. Verfahren zum Zusammenbauen von Reifen für Fahrzeugräder, welches die Schritte aufweist:
a) Anordnen eines Karkassenaufbaus (3) mit wenigstens einer Karkassenlage (10) in Eingriff mit ringförmigen Verankerungsaufbauten (7), die axial voneinander beabstandet sind, auf einer Haupttrommel (13),
b) Anordnen eines Gurtaufbaus (4) mit wenigstens einer Gurtlage (11a, 11b, 12) auf einer Zusatztrommel (15), die in einer Beziehung mit koaxialer Ausrichtung zu der Haupttrommel (13) angeordnet ist, danach
c) Bewegen der Zusatztrommel (15) weg aus der Vertikalebene, die die Drehachse der Haupttrommel (13) enthält, zu einem Abgabeelement (18, 18a) hin, beginnend von einer Position aus, an der die Zusatztrommel (15) mit Einrichtungen (16) zum Aufbringen des Gurtaufbaus zusammenwirkt, danach
d) Aufbringen eines Laufflächenbandes (5) auf den Gurtaufbau (4) durch Wickeln wenigstens eines fortlaufenden streifenförmigen Elements aus elastomerem Material in benachbarten Umfangswindungen um den Gurtaufbau (4) herum, danach
e) Bewegen der Zusatztrommel (15) weg von dem Abgabeelement (18, 18a), um sie wieder in eine Beziehung mit axialer Ausrichtung bezüglich der Haupttrommel (13) zu positionieren, nachdem das Aufbringen des Laufflächenbandes (5) abgeschlossen worden ist, und danach
f) Aufnehmen des Gurtaufbaus (4) von der Zusatztrommel (15), um ihn in eine Position zu überführen, die koaxial bezüglich des Karkassenaufbaus (3) zentriert ist.

2. Verfahren nach Anspruch 1, bei welchem das fortlaufende streifenförmige Element von einem Abgabeelement (18, 18a), das in einem Bereich nahe an dem Gurtaufbau (4) angeordnet ist, gleichzeitig mit dem Wickeln des streifenförmigen Elements um den Gurtaufbau (4) herum zugeführt wird.

3. Verfahren nach Anspruch 2, bei welchem das Zuführen des fortlaufenden streifenförmigen Elements durch Extrusion durch das Abgabeelement (18, 18a) hindurch ausgeführt wird.

4. Verfahren nach Anspruch 2, bei welchem gleichzeitig zum Aufbringen des fortlaufenden streifenförmigen Elements die folgenden Schritte ausgeführt werden:
- Erteilen der den Gurtaufbau (4) tragenden Zusatztrommel (15) eine Umfangsverteilungs-Drehbewegung um ihre geometrische Drehachse, so dass das fortlaufende streifenförmige Element am Umfang um den Gurtaufbau (4) herum verteilt wird, und
- Ausführen von gesteuerten relativen Querverteilungsverschiebungen zwischen der Zusatztrommel (15) und dem Abgabeelement (18, 18a) derart, dass mit dem streifenförmigen Element eine Vielzahl von Windungen gebildet wird, die zur Bildung des Laufflächenbandes (5) in einer Beziehung Seite an Seite zueinander angeordnet werden.

5. Verfahren nach Anspruch 4, bei welchem die Querverteilungsverschiebungen durch Bewegung der Zusatztrommel (15) ausgeführt werden.

6. Verfahren nach Anspruch 4, bei welchem das In-Drehung-Versetzen und die Bewegung der Zusatztrommel (15) durch eine Betätigungsanordnung (19a) ausgeführt werden, die an der Zusatztrommel angreift.

7. Verfahren nach Anspruch 1, bei welchem der Schritt des Anordnens des Karkassenaufbaus (3) **dadurch** ausgeführt wird, dass die Bauteile des Karkassenaufbaus auf der Haupttrommel (13) zusammengefügt werden.

8. Verfahren nach Anspruch 1, bei welchem der Gurtaufbau (4), der zu einer koaxial zentrierten Position auf dem Karkassenaufbau (3) überführt wird, mit dem Karkassenaufbau nach einem Schritt verbunden wird, in welchem der Karkassenaufbau (3) in eine Torusform gebracht wird.

9. Vorrichtung zum Zusammenbauen von Reifen für Fahrzeugräder
- mit einer Haupttrommel (13), die zum Halten eines Karkassenaufbaus (3) angeordnet ist, der wenigstens eine Karkassenlage (10) in Eingriff mit Verankerungsaufbauten (7) aufweist, die axial voneinander beabstandet sind,
- mit einer Zusatztrommel (15) zum Tragen eines Gurtaufbaus (4),
- mit Einrichtungen (16) zum Aufbringen von Gurtlagen auf die Zusatztrommel (15), die in einer Beziehung mit koaxialer Ausrichtung zu der Haupttrommel (13) angeordnet ist, um den Gurtaufbau (4) zu bilden,
- mit wenigstens einer Einheit (17) zum Aufbringen eines Laufflächenbandes (5) auf den Gurtaufbau (4),
- mit einem Überführungselement (28) zum Bewegen des Gurtaufbaus (4) von der Zusatztrommel (15) zur Haupttrommel (13),
- wobei die wenigstens eine Aufbringeinheit (17)
-- wenigstens ein Abgabeelement (18, 18a) zum Ablegen wenigstens eines fortlaufenden streifenförmigen Elements aus elastomerem Material in benachbarten Umfangswindungen auf dem Gurtaufbau (4) und
-- eine Betätigungsanordnung (19) für das In-Drehung-Versetzen der Zusatztrommel (15) um ihre geometrische Achse herum aufweist, so dass das streifenförmige Element am Umfang auf dem Gurtaufbau (4) verteilt wird, und für das Herbeiführen von gesteuerten Relativverschiebungen zwischen der Zusatztrommel (15) und dem wenigstens einen Abgabeelement (18, 18a) zur Verteilung des streifenförmigen Elements derart, dass Windungen gebildet werden, die in einer Beziehung Seite an Seite zueinander zur Bildung des Laufflächenbandes (5) angeordnet werden, und
- wobei die Betätigungsanordnung (19) angeordnet ist
-- um eine Verschiebung der Zusatztrommel (15) weg aus einer Vertikalebene, die die Drehachse der Haupttrommel (13) enthält, zu dem wenigstens einen Abgabeelement (18, 18a) hin ausgehend von einer Position, an der die Zusatztrommel (15) mit den Einrichtungen (16) zum Aufbringen des Gurtaufbaus zusammenwirkt, herbeizuführen, und
-- um die Zusatztrommel (15) weg von dem Abgabeelement (18, 18a) zu bewegen, damit sie wieder in einer Beziehung mit axialer Ausrichtung bezüglich der Haupttrommel (13) angeordnet wird.

10. Vorrichtung nach Anspruch 9, bei welcher das Abgabeelement wenigstens einen Extruder (18, 18a) aufweist.

11. Vorrichtung nach Anspruch 9, bei welcher die Betätigungsanordnung (19) an der Zusatztrommel (15) so arbeitet, dass sie relativ zu dem Abgabeelement (18, 18a) bewegt wird.

12. Vorrichtung nach Anspruch 9, bei welcher die Betätigungsanordnung in einen robotisierten Arm (19a) integriert ist, der an der Zusatztrommel (15) angreift.

13. Vorrichtung nach Anspruch 9, bei welcher die Betätigungsanordnung (19) einen Wagen (19b) aufweist, der längs eines Führungsaufbaus (27) zwischen einer ersten Position, in welcher er die Zusatztrommel (15) an einer Stelle vor den Aufbringeinrichtungen (16) des Gurtaufbaus hält, und einer zweiten Position bewegbar ist, in welcher er die Zusatztrommel (15) an einer Stelle vor dem wenigstens einen Abgabeelement (18, 18a) hält.

## Revendications

1. Procédé d'assemblage de pneus pour roues de véhicule, comprenant les étapes consistant à :
(a) - disposer sur un tambour primaire (13) une structure de carcasse (3) comprenant au moins une nappe de carcasse (10) en contact avec des structures d'ancrage annulaires (7) espacées axialement les unes des autres ;
(b) - disposer une structure de ceinture (4) comprenant au moins une couche de ceinture (11a, 11b, 12) sur un tambour auxiliaire (15) placé de façon coaxiale par rapport au tambour primaire (13) ; puis
(c) - éloigner le tambour auxiliaire (15) d'un plan vertical contenant l'axe de rotation du tambour primaire (13), vers un organe de distribution (18, 18a), en partant d'une position dans laquelle le tambour auxiliaire (15) interagit avec des dispositifs (16) pour l'application de la structure de ceinture ; puis
(d) - appliquer une bande de roulement (5) sur la structure de ceinture (4) en enroulant au moins un élément en bande continu en matériau élastomère en spires circonférentielles contiguës autour de la structure de ceinture (4) ; puis
(e) - éloigner le tambour auxiliaire (15) dudit organe de distribution (18, 18a) pour le repositionner en alignement axial par rapport au tambour primaire (13), une fois achevée l'application de la bande de roulement (5) ; puis
(f) - enlever la structure de ceinture (4) du tambour auxiliaire (15) pour la transférer dans une position centrée de façon coaxiale par rapport à la structure de carcasse (3).

2. Procédé selon la revendication 1, dans lequel l'élément en bande continu est fourni par un organe de distribution (18, 18a) placé dans une région proche de la structure de ceinture (4), simultanément à l'enroulement de l'élément en bande lui-même autour de la structure de ceinture (4).

3. Procédé selon la revendication 2, dans lequel la fourniture de l'élément en bande continu est exécutée par extrusion à travers ledit organe de distribution (18, 18a).

4. Procédé selon la revendication 2, dans lequel, simultanément à l'application de l'élément en bande continu, les étapes suivantes sont exécutées :
- donner au tambour auxiliaire (15) portant la structure de ceinture (4) un mouvement rotatif de distribution circonférentielle autour d'un axe géométrique de rotation de celui-ci, de sorte que l'élément en bande continu est distribué dans le sens de la circonférence autour de la structure de ceinture (4) ;
- effectuer des déplacements relatifs contrôlés de distribution transversale entre le tambour auxiliaire (15) et l'organe de distribution (18, 18a) de sorte qu'avec ledit élément en bande, une multitude de spires disposées côte à côte sont formées, afin de définir la bande de roulement (5).

5. Procédé selon la revendication 4, dans lequel lesdits déplacements de distribution transversale sont effectués par le mouvement du tambour auxiliaire (15).

6. Procédé selon la revendication 4, dans lequel l'entraînement en rotation et le mouvement du tambour auxiliaire (15) sont effectués par un ensemble d'actionnement (19a) qui entraîne le tambour auxiliaire lui-même.

7. Procédé selon la revendication 1, dans lequel l'étape de mise en place de la structure de carcasse (3) est exécutée en assemblant les composants de la structure de carcasse elle-même sur le tambour primaire (13).

8. Procédé selon la revendication 1, dans lequel la structure de ceinture (4) transférée dans une position centrée de façon coaxiale sur la structure de carcasse (3) est couplée avec ladite structure de carcasse suite à une étape de mise en forme de la structure de carcasse (3) elle-même en une configuration toroïdale.

9. Dispositif permettant d'assembler des pneus pour roues de véhicule, comprenant :
- un tambour primaire (13) prévu pour supporter une structure de carcasse (3) comprenant au moins une nappe de carcasse (10) en contact avec des structures d'ancrage (7) axialement espacées les unes des autres ;
- un tambour auxiliaire (15) prévu pour porter une structure de ceinture (4) ;
- des dispositifs (16) pour l'application de couches de ceinture sur le tambour auxiliaire (15) placé de façon coaxiale par rapport au tambour primaire (13), pour former ladite structure de ceinture (4) ;
- au moins une unité (17) pour l'application d'une bande de roulement (5) sur la structure de ceinture (4) ;
- un organe de transfert (28) pour déplacer la structure de ceinture (4) du tambour auxiliaire (15) vers le tambour primaire (13) ;
dans lequel ladite au moins une unité d'application (17) comprend :
- au moins un organe de distribution (18, 18a) pour déposer au moins un élément en bande continu en matériau élastomère en spires circonférentielles contiguës sur la structure de ceinture (4) ; et
- un ensemble d'actionnement (19) prévu pour entraîner le tambour auxiliaire (15) en rotation autour d'un axe géométrique de celui-ci, de sorte que ledit élément en bande est distribué dans le sens de la circonférence sur la structure de ceinture (4), et pour provoquer des déplacements relatifs contrôlés entre le tambour auxiliaire (15) et ledit au moins un organe de distribution (18, 18a) pour la distribution dudit élément en bande afin de former lesdites spires disposées côte à côte pour définir la bande de roulement (5) ;
dans lequel ledit ensemble d'actionnement (19) est adapté pour :
- provoquer la translation du tambour auxiliaire (15) à l'écart d'un plan vertical contenant l'axe de rotation du tambour primaire (13), vers ledit au moins un organe de distribution (18, 18a), en partant d'une position dans laquelle le tambour auxiliaire (15) interagit avec des dispositifs (16) pour l'application de la structure de ceinture, et
- éloigner le tambour auxiliaire (15) dudit organe de distribution (18, 18a) pour le repositionner en alignement axial par rapport au tambour primaire (13).

10. Dispositif selon la revendication 9, dans lequel ledit organe de distribution comprend au moins une extrudeuse (18, 18a).

11. Dispositif selon la revendication 9, dans lequel ledit ensemble d'actionnement (19) agit sur le tambour auxiliaire (15) pour le déplacer par rapport à l'organe de distribution (18, 18a).

12. Dispositif selon la revendication 9, dans lequel ledit ensemble d'actionnement est intégré dans un bras robotisé (19a) qui se met en contact avec le tambour auxiliaire (15).

13. Dispositif selon la revendication 9, dans lequel l'ensemble d'actionnement (19) comprend un chariot (19b) mobile le long d'une structure de guidage (27) entre une première position dans laquelle il supporte le tambour auxiliaire (15) en un emplacement situé en face de dispositifs d'application (16) de la structure de ceinture, et une deuxième position dans laquelle il supporte le tambour auxiliaire (15) en un emplacement situé en face dudit au moins un organe de distribution (18, 18a).
